# FASCICULE DE BREVET EUROPEEN

(11) **EP 3 024 108 B1**
(45) Date de publication et mention de la délivrance du brevet: **12.07.2017**
(21) Numéro de dépôt: 15195443.5
(22) Date de dépôt: 19.11.2015
(51) Int. Cl.: H02J 3/18

(54) **PROCÉDÉ D'OPTIMISATION DE L'ÉNERGIE ÉLECTRIQUE D'APPOINT FOURNIE PAR UNE SOURCE AUXILIAIRE**
VERFAHREN ZUR OPTIMIERUNG DER ELEKTRISCHEN ZUSATZENERGIE, DIE VON EINER HILFSQUELLE GELIEFERT WIRD
METHOD FOR OPTIMISING BACKUP ELECTRIC ENERGY SUPPLIED BY AN AUXILIARY SOURCE

(30) Priorité: 21.11.2014 FR 1461303
(43) Date de publication de la demande: 25.05.2016
(73) Titulaire: Evtronic, 33600 Pessac (FR)
(72) Inventeur: DUPONCHEEL, Romain, 33650 SAINT MORILLON (FR)
(74) Mandataire: Deschamps, Samuel

(56) Documents cités:
- EP-A2- 0 194 574
- US-A- 4 891 569
- US-A1- 2004 164 718
- US-A1- 2010 283 435
- US-A1- 2012 081 072
- US-B1- 6 462 519

## Description

### DOMAINE DE L'INVENTION

L'invention se rapporte au domaine général des réseaux d'alimentation électrique et des dispositifs permettant de fournir un apport auxiliaire d'énergie à de tels réseaux.

L'invention se rapporte plus particulièrement au domaine des bornes de rechargement rapide de véhicules à propulsion électrique et dans celui des réseaux électriques intelligents (« SMART-GRID »).

### CONTEXTE DE L'INVENTION - ART ANTERIEUR

Lorsque l'on s'intéresse à la réalisation de bornes de rechargement rapide de véhicules électriques on est généralement affronté au problème posé par l'utilisation du réseau secteur standard.

En effet pour être aisément utilisables, ces bornes doivent pouvoir être implantées au niveau des zones de stationnement présentes sur la voie publique. De telles bornes utilisent par ailleurs le réseau secteur auquel elles sont raccordées comme source principale d'énergie électrique.

Or dans un tel contexte de déploiement, le réseau secteur généralement disponible est un réseau standard, grand publique, dont la puissance disponible est par construction limitée. Par suite, dans la mesure où, durant certaines phases du rechargement, le courant de charge nécessaire pour réaliser la charge rapide d'un véhicule est supérieur au courant disponible sur le réseau, on est contraint soit à limiter le courant de charge du véhicule de sorte que le temps de charge se trouve allongé, soit d'apporter par l'intermédiaire de sources auxiliaires d'énergie électrique le complément d'intensité électrique nécessaire pour réaliser la charge du véhicule dans les délais les plus brefs.

Cet apport d'énergie électrique est généralement fourni par des batteries auxiliaires annexées à la borne de chargement rapide, qui jouent le rôle de réservoirs tampons qui sont déchargés lorsque le courant de charge requis est supérieur au courant disponible sur le réseau et rechargés lorsque
le courant de charge requis devient inférieur ou qu'aucune charge de véhicule n'est en cours.

D'un point de vue tant ergonomique quant à l'encombrement des bornes de rechargement rapide, qu'économique quant au coût de fabrication de bornes utilisant des batteries auxiliaires de grande capacité, il est nécessaire de pouvoir dimensionner de la manière la plus juste possible en termes de capacité, les batteries nécessaires pour assurer un fonctionnement satisfaisant des bornes considérées, en termes de temps de rechargement notamment.

On connaît dans l'état de la technique le brevet américain N° US 6 462 519 B1, qui décrit un système automatique de correction de facteur de puissance pour une installation électrique.

### PRESENTATION DE L'INVENTION

Un but de l'invention est de proposer une solution permettant de limiter l'apport d'énergie fourni par les moyens auxiliaires d'une borne de rechargement de véhicules électriques lors de la charge rapide d'un tel véhicule, en tirant le meilleurs parti, en termes de puissance disponible, du réseau secteur auquel la borne est raccordée.

A cet effet l'invention a pour objet un procédé pour optimiser la puissance délivrée à un équipement électrique par un réseau de distribution d'énergie électrique, ledit réseau comportant une source d'énergie électrique produisant une puissance de valeur donnée et une ligne de transport d'énergie électrique présentant une impédance réactive, l'équipement électrique étant raccordé à la source par l'intermédiaire de la ligne de transport, ledit procédé mettant en oeuvre des moyens pour contrôler le déphasage tension-courant au niveau du point de raccordement de l'équipement au réseau le déphasage étant déterminé de manière itérative de façon à minimiser le courant efficace circulant dans la ligne de transport.

Selon un mode de mise en oeuvre particulier, le procédé selon l'invention comporte les étapes suivantes:
- Une première étape d'attente;
- Une deuxième étape durant laquelle on procède à une première mesure I₀ du courant absorbé et à sa mémorisation;
- Une troisième étape durant laquelle on procède l'acquisition d'une valeur de palier de courant réactif;
la deuxième et la troisième étapes constituant une phase d'initialisation;
- Une quatrième étape durant laquelle on procède à l'injection sur la ligne de transport dudit palier de courant;
- Une cinquième étape durant laquelle on procède à une mesure courante Iₙ₊₁ du courant absorbé et à sa mémorisation;
- Une sixième étape durant laquelle on détermine si Iₙ₊₁ est inférieure Iₙ;
- Une septième étape durant laquelle si le test de la sixième étape est positif on incrémente la valeur courante du palier de courant réactif d'une valeur donnée;
- Une huitième étape durant laquelle, si le test de la sixième étape est négatif, on change le signe de l'incrément.

L'exécution des septième et huitième étapes étant suivie de l'exécution de la quatrième étape de sorte que la succession des étapes quatre à sept constituent une phase d'exécution itérative.
Par ailleurs, le signe de l'incrément appliqué à la valeur courante du palier de courant réactif lors de la septième étape (27), initialement positif, est fixé par l'exécution de l'étape 28 (inversion du signe courant) si le test de la sixième étape est négatif.

Selon une variante du mode de mise en oeuvre précédent le procédé selon l'invention comporte en outre:
- une neuvième étape de mesure de la tension V délivrée par le réseau en bout de ligne de transport;
- une dixième étape de test durant laquelle on détermine si la différence entre la tension V mesurée et une valeur de tension réseau nominale est inférieure à un seuil imposé donné;

L'exécution de cette dixième étape se poursuivant par l'exécution de la cinquième étape si le test est positif et par l'exécution de la quatrième étape si le test est négatif.

Selon une disposition particulière, l'incrément ajouté ou retranché au palier de courant réactif courant au cours de la septième étape présente une valeur fixe.

Selon une autre disposition particulière, l'amplitude initiale du palier de courant injecté au cours de la troisième étape ainsi que la valeur de l'incrément d'amplitude ajouté au cours de la septième étape à l'amplitude courante du palier de courant réactif, sont définies en fonction de la précision avec laquelle on souhaite réguler la valeur de la puissance fournie par le réseau et la rapidité avec laquelle on souhaite minimiser la valeur efficace du courant consommé.

Selon une autre disposition particulière, l'incrément positif ou négatif ajouté au palier courant réactif respectivement au cours de la septième étape présente une valeur qui varie en fonction de la valeur de l'écart (Iₙ₊₁ - Iₙ) mesurée au cours de la sixième étape.

Selon une autre disposition particulière, le passage de l'étape d'attente aux étapes d'initialisation est initié par une commande externe.

Selon une autre disposition particulière, le passage de l'étape d'attente aux étapes d'initialisation est initié par la valeur d'une variable d'état indiquant une augmentation de la puissance consommée par l'équipement alimenté par le réseau.

### DESCRIPTION DES FIGURES

Les caractéristiques et avantages de l'invention seront mieux appréciés grâce à la description qui suit, description qui s'appuie sur les figures annexées qui présentent:
- la figure 1, une illustration du principe de fonctionnement du procédé selon l'invention;
- la figure 2, un organigramme décrivant les étapes principales du procédé selon l'invention;
- la figure 3, un organigramme décrivant une variante de mise en oeuvre du procédé selon l'invention;
- la figure 4, des chronogrammes illustrant les effets de la mise en oeuvre du procédé selon l'invention sur les phases relatives des tensions et courants.

### DESCRIPTION DETAILLEE

Comme cela a été dit précédemment, l'objet de l'invention est de permettre de maximiser l'énergie pouvant être délivrée par le réseau principal de fourniture d'énergie, sachant qu'une limite de courant est généralement imposée par le réseau (protection par disjoncteur magnéto thermique par exemple). On considère ici un système constitué par une source d'énergie électrique, une ligne de transport permettant d'acheminer cette énergie en un endroit distant de la source, ces deux éléments formant un réseau de distribution d'énergie électrique, et un point d'utilisation situé en bout de ligne de transport, qui représente le point de raccordement au réseau de l'équipement à alimenter, une borne de rechargement rapide de véhicules électriques par exemple.

De la même qu'au niveau de l'utilisation il existe des moyens (PFC) permettant de relever le facteur de puissance de la charge et d'améliorer la puissance disponible à ce niveau, le procédé selon l'invention a pour fonction de maximiser la puissance disponible sur le réseau en compensant les déphasages entre la tension et le courant délivrés par ce dernier, déphasage (angle de transport) lié au transport de l'énergie électrique à travers des lignes physiques qui se comportent comme des réactances. Cette maximisation permet avantageusement d'optimiser le dimensionnement de la (des) source(s) d'énergie auxiliaire(s).

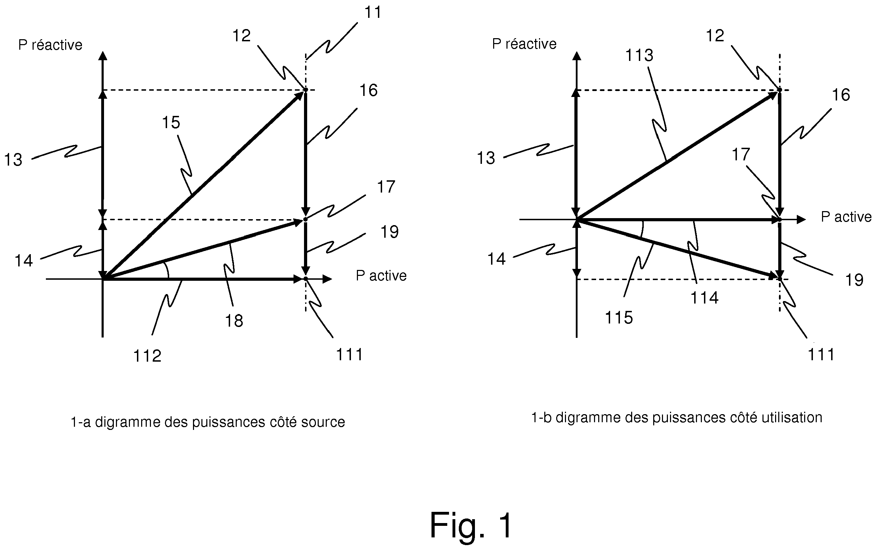

Les diagrammes 1-a et 1-b de la figure 1 illustrent le principe de fonctionnement du procédé selon l'invention. On considère ici, à titre d'exemple destiné à faciliter la compréhension de l'invention, un système composé d'un réseau de distribution électrique comportant une source d'énergie électrique et une ligne de transport, ainsi qu'un équipement électrique raccordé au réseau au niveau de l'extrémité de la ligne cet équipement consommant une puissance constante. Cet exemple de mise en oeuvre peut aisément être généralisé à d'autres cas d'utilisation d'un réseau de distribution électrique, tels que l'utilisation pour alimenter un équipement tendant à consommer une puissance maximale sur le réseau.

Sur les diagrammes 1-a et 1-b les axes de référence sont l'axe des abscisses qui correspond aux puissances actives et l'axe des ordonnées qui correspond aux puissances réactives.

Ces deux diagrammes présentent les différents points de fonctionnement possibles du système considéré, en fonction des moyens de compensation mis en oeuvre au niveau de l'utilisation, respectivement pour la source d'énergie électrique alimentant la ligne (diagramme 1-a) et pour l'équipement alimenté, en bout de la ligne de transport (diagramme 1-b). On néglige ici les pertes en ligne dues aux éléments purement résistifs.

Les diagrammes 1-a et 1-b, montrent que le fonctionnement d'un équipement donné consommant une puissance active et une puissance réactive de valeurs données, matérialisées respectivement par l'axe 11 et par la flèche 13, correspond, en l'absence de toute compensation, à un point de fonctionnement 12. Ce point de fonctionnement correspond lui-même à une puissance apparente consommée sur la ligne de transport, matérialisée par la flèche 113, plus importante que la puissance active réellement consommée par l'équipement alimenté. Ceci a pour conséquence que la source doit délivrer une puissance efficace, matérialisée par la flèche 15, sensiblement supérieur à la puissance active nécessaire pour alimenter l'équipement considéré, puissance qui doit par ailleurs prendre en compte la puissance réactive consommée par les lignes de transport, matérialisée par la flèche 14.

En revanche les diagrammes 1-a et 1-b montrent également que si l'utilisation comporte des moyens pour compenser le facteur de puissance de l'équipement alimenté, autrement dit pour compenser la puissance réactive consommée, on obtient un point de fonctionnement 17 plus favorable, pour lequel la source délivre une puissance efficace, matérialisée par la flèche 18, de valeur sensiblement plus faible. Cette compensation, matérialisée par la flèche 16, a pour effet que la puissance consommée par l'équipement, matérialisée par la flèche 114, est alors purement active et la tension d'alimentation de l'équipement étant en phase avec le courant consommé.

Néanmoins, comme on peut le constater sur les diagrammes 1-a et 1-b, la puissance délivrée par la source comporte encore une composante réactive matérialisée par la flèche 18, ce qui se traduit par une puissance disponible en bout de ligne plus faible que la puissance que la source est capable de fournir.

Par suite, l'action du procédé selon l'invention consiste à compenser le facteur de puissance de la ligne de transport d'énergie, autrement dit à compenser la puissance réactive consommée par celle-ci, puissance matérialisée par la flèche 14. Cette compensation a pour effet de remettre en phase le courant traversant la ligne de transport et la tension délivrée par la source comme illustré par la flèche 112, de sorte que le fonctionnement du système correspond à un point de fonctionnement 111 encore plus favorable, pour lequel la source délivre une puissance efficace maximale.

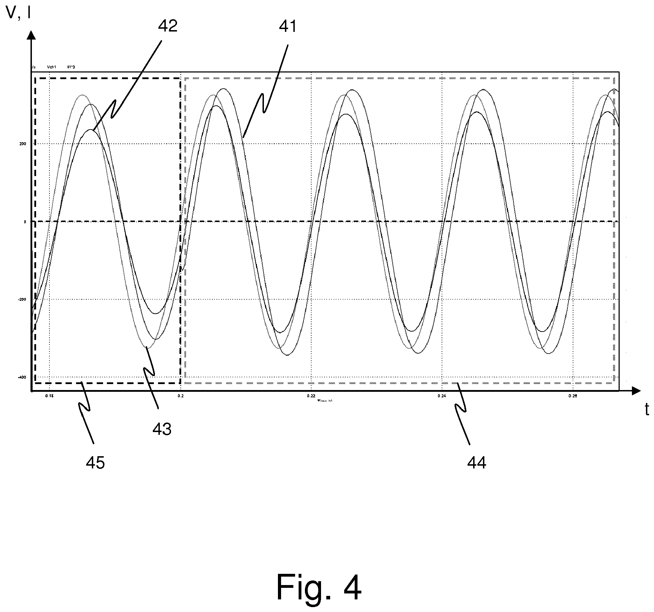

Il est à noter que la compensation ainsi réalisée entraine l'apparition d'une composante réactive au niveau la puissance délivrée à l'utilisation et matérialisée par la flèche 115, composante réactive qui se traduit par l'introduction d'un déphasage entre la tension 41 délivrée à l'équipement et le courant consommé 42 comme illustré par la figure 4 (encadré 44), la tension source 43 et le courant consommé 42 étant alors de nouveau en phase contrairement à ce qui se passe en l'absence de la compensation réalisée par l'invention (encadré 45).

Ainsi comme l'illustrent les diagrammes 1-a et 1-b de la figure 1, la mise en oeuvre du dispositif selon l'invention permet, en compensant le déphasage introduit par la ligne de transport d'énergie, de tirer le meilleur parti de la puissance maximale que peut délivrer la source.
Par suite si la puissance demandée par l'équipement est plus importante à un moment donné que celle fournie par la source, il sera fait appel à une source auxiliaire qui aura pour fonction d'apporter un complément de puissance d'autant plus faible que la proportion de puissance délivrée par la source et transférée à l'équipement est plus importante. Autrement dit, grâce à la mise en oeuvre du procédé selon l'invention, pour une puissance consommée donnée le dimensionnement de la source de puissance auxiliaire n'a avantageusement plus à prendre en compte les pertes de puissance sur le réseau consécutives à l'existence d'une puissance réactive consommée par la ligne de transport.

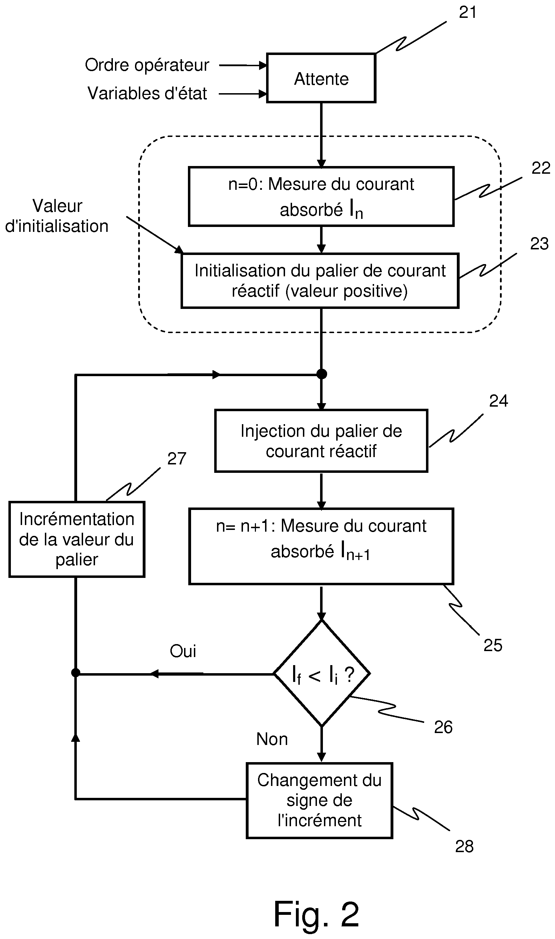

La figure 2 présente un organigramme de principe décrivant les étapes principales du procédé selon l'invention.

Comme il a été dit précédemment, pour que le transfert de puissance électrique d'une source vers une utilisation soit maximal il est nécessaire de maintenir le courant transitant sur la ligne - et disponible en bout de ligne pour l'utilisateur - en phase avec la tension délivrée par la source, en amont de la ligne de transport. Ceci implique de maintenir un facteur de puissance proche de un au niveau de l'utilisation. Côté utilisation cela se traduit par la minimisation de la valeur efficace du courant consommé.

Le maintien du courant de ligne en phase avec la tension réseau nécessite en théorie, pour être réalisé de manière simple, de connaitre la valeur instantanée de la tension en amont de la ligne de distribution. Or, en pratique une telle mesure est généralement impossible ou du moins très difficilement envisageable, notamment dans le cas d'une exploitation localisé en bout de ligne de transport.

C'est pourquoi le procédé selon l'invention réalise cette opération, non pas en considérant la valeur de la tension délivrée en amont de la ligne de distribution, mais en réalisant une mesure du courant efficace consommé au point de raccordement de l'utilisateur, autrement dit en bout de ligne de transport, la tension en ce point étant maintenue dans une limite donnée fixée par ailleurs. Par suite, le procédé selon l'invention consiste à injecter à l'extrémité de la ligne, côté utilisation, un courant purement réactif présentant une intensité suffisante pour assurer une minimisation du courant efficace consommé sur le réseau, la valeur du courant réactif injecté nécessaire à cette opération étant établie de manière itérative par approximations successives.

Pour réaliser cette optimisation, le procédé selon l'invention comporte, comme l'illustre la figure 2, les étapes suivantes:
Une première étape 21 d'attente durant laquelle le procédé n'injecte aucun courant réactif au niveau du point de raccordement au réseau et n'exerce donc aucune compensation;
Une deuxième étape 22 d'initialisation durant laquelle on procède à une mesure I₀ du courant absorbé;
Une troisième étape 23 durant laquelle on procède à l'initialisation d'une valeur de palier de courant réactif d'amplitude positive donnée;
Une quatrième étape 24 durant laquelle on procède à l'injection sur la ligne de transport du palier de courant réactif défini à l'étape 23;
Une cinquième étape 25 durant laquelle on réalise une mesure de la valeur courante Iₙ₊₁ du courant absorbé sur le réseau électrique;
Une sixième étape 26 durant laquelle on détermine si la mesure de la valeur courante Iₙ₊₁ du courant absorbé est inférieure à la mesure Iₙ réalisée précédemment;
Une septième étape 27 durant laquelle on incrémente la valeur courante du palier de courant réactif (palier = palier + incrément) d'une valeur donnée dont le signe, initialement positif, est fixé par l'exécution de l'étape 28 si le test de l'étape 26 est négatif;
Une huitième étape 28 durant laquelle si le test de l'étape 26 est négatif, on change le signe de la valeur de l'incrément (Incrément = incrément * (-1)).

Du point de vue de son fonctionnement, le procédé selon l'invention présente trois phases, comme l'illustre la figure 2:
- une phase d'attente correspondant à l'étape 21 durant laquelle il est inactif,
- une phase d'initialisation correspondant aux étapes 22 et 23 exécutée une seule fois, après la phase d'attente, durant la mise en oeuvre du procédé ;
- une phase d'itération correspondant aux étapes 24 à 28.

Le passage de la phase d'attente (étape 21) à la phase d'activité (étapes 24 à 28) peut selon l'invention être engagé de manière volontaire, par envoi d'un ordre de mise en action ou d'arrêt transmis par un opérateur, ou encore de manière automatique consécutivement à l'état de variables externes, dont l'état est notamment fonction de la consommation de l'équipement considéré sur le réseau électrique.

Ainsi par exemple, si la puissance électrique consommée par l'équipement est inférieure à la puissance disponible sur le réseau sans compensation particulière, le procédé selon l'invention n'est pas activé et reste en phase d'attente (étape 21).

Inversement, si durant une période de temps donnée, la puissance fournie par le réseau sans compensation se trouve en deçà de la puissance demandée par l'équipement, le procédé selon l'invention est activé de façon à optimiser la puissance fournie par le réseau, en minimisant le déphasage entre le courant délivré en bout de ligne par le réseau et la tension délivrée en tête de ligne par la source d'énergie électrique.

Les étapes 24 à 28 du procédé sont quant à elles réitérées de manière continue en l'absence de tout action visant à arrêter la mise en oeuvre du procédé, l'amplitude du palier de courant réactif étant incrémentée ou décrémentée à chaque itération. A l'issue de l'étape 26, le procédé se poursuit, selon le résultat du test, directement par l'étape 27 ou par l'étape 28 puis l'étape 27, pour une nouvelle itération du procédé.

Selon l'invention, l'amplitude initiale du palier de courant injecté (étape 23) ainsi que la valeur, positive ou négative, de l'incrément d'amplitude ajouté (étape 27) à l'amplitude courante du palier de courant réactif sont définies en fonction de la précision et/ou la rapidité avec laquelle on souhaite réguler la valeur de la puissance fournie par le réseau. Par pallier de courant on entend ici un courant de valeur efficace donnée constante.

Il est à noter qu'en cas d'enregistrement d'un changement rapide de la valeur du courant consommé, la valeur de l'incrément peut être modifiée de façon à réaliser une convergence rapide vers un autre point de fonctionnement avec une valeur minimale de courant sensiblement différente de la valeur mesurée courante. L'étape 27 effectue alors l'incrémentation positive ou négative de la valeur du palier avec un incrément dont l'amplitude est par exemple fonction de l'écart entre I_{f} et Iᵢ.

D'un point de vue fonctionnel le procédé selon l'invention peut être mis en oeuvre selon différentes modalités qui sont fonction du résultat recherché, le but à atteindre étant toujours de n'avoir recours à une source d'énergie auxiliaire que dans la mesure la plus limitée possible, après avoir tiré du réseau le maximum de la puissance que la source d'énergie peut délivrer.

Ainsi, par exemple, dans le cas d'une utilisation pour réaliser l'alimentation d'un équipement fonctionnant à puissance constante, il est possible de ne mettre en fonctionnement le procédé que si la puissance demandée est voisine de, ou supérieure à, la puissance maximale fournie par le réseau en l'absence de compensation de la réactance de la ligne de transport. L'action du procédé consiste alors à injecter une puissance réactive suffisante pour minimiser les pertes dues à la ligne de transport. Cette action se traduit par une minimisation du courant efficace (par minimisation du courant réactif) absorbé sur la ligne et par suite par une augmentation de la tension délivrée par la ligne de transport et une augmentation de la puissance disponible sur le réseau. Par suite si après optimisation la puissance délivrée par le réseau est suffisante pour alimenter l'équipement, aucune source d'énergie électrique auxiliaire n'est sollicitée.

De la même façon, par exemple, dans le cas d'une utilisation pour réaliser l'alimentation d'un équipement fonctionnant à puissance maximale, c'est-à-dire consommant la puissance maximale disponible, il est possible de mettre en fonctionnement le procédé de manière continue, le courant absorbé par l'équipement étant alors limité au courant maximum imposé par le réseau. L'action du procédé consiste alors également à injecter une puissance réactive suffisante pour minimiser les pertes dues à la ligne de transport. Elle a pour effet d'augmenter la tension côté utilisation de façon à maintenir le courant consommé à sa valeur maximale, de sorte que la puissance disponible soit accrue. Par suite si l'optimisation opérée permet de disposer d'une puissance suffisante pour alimenter l'équipement, aucune source d'énergie électrique auxiliaire n'est sollicitée.

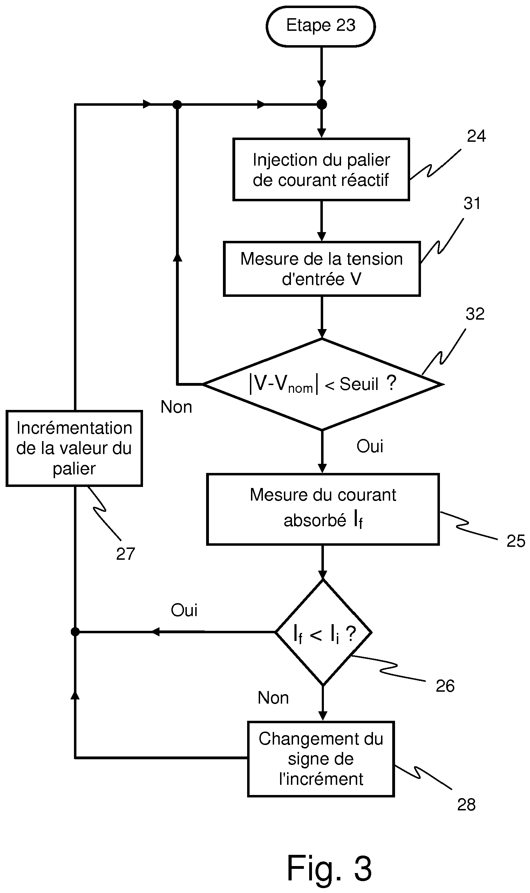

Il est à noter que dans certains cas d'application, l'élévation de la tension disponible au niveau de l'utilisation (i.e. en bout de ligne de transport) ne peut dépasser un seuil fixé par le fournisseur d'énergie, un seuil correspondant par exemple à une plage de variation de plus ou moins 10% autour d'une valeur nominale. Pour répondre à ce type d'exigence, le procédé selon l'invention peut alors comporter, comme l'illustre la figure 3 les étapes complémentaires 31 de mesure de la tension d'entrée et 32 de comparaison de la valeur mesurée à un seuil déterminé. Par suite, si ce seuil est atteint au cours de la mise en oeuvre du procédé selon l'invention, la compensation réalisée par le procédé selon l'invention est limitée l'action réalisée juste avant l'atteinte du seuil (pas d'incrémentation ou de décrémentation de la valeur du palier) et ce, même si elle ne produit pas la totalité de ses effets.

D'un point de vue matériel, le procédé selon l'invention peut être avantageusement mis en oeuvre par tout moyen approprié permettant de modifier la réactance d'un circuit. Il peut ainsi être implémenté par un dispositif indépendant placé en entrée, au niveau du point de raccordement au réseau, ou encore être implémenté par un équipement existant, le dispositif de correction du facteur de puissance (PFC) de l'équipement alimenté par exemple (gradins de condensateurs, onduleur commandé en courant, machine synchrone, etc..).

Le procédé selon l'invention présente ainsi une solution innovante qui permet avantageusement d'optimiser le transfert de puissance entre la source fournissant l'énergie électrique au réseau et le point de raccordement au réseau électrique de l'équipement considéré, une borne de rechargement rapide de véhicules électriques par exemple, de façon à bénéficier de tout le potentiel du réseau de distribution d'énergie électrique.

De manière incidente, le procédé permet de minimiser l'effet des pertes en lignes et par conséquent d'éviter le surdimensionnement des lignes de transport d'énergie électrique.

## Revendications

1. Procédé pour optimiser la puissance délivrée à un équipement électrique par un réseau de distribution d'énergie électrique, ledit réseau comportant une source d'énergie électrique produisant une puissance de valeur donnée et une ligne de transport d'énergie électrique présentant une impédance réactive, l'équipement électrique étant raccordé à la source par l'intermédiaire de la ligne de transport, **caractérisé en ce que** ledit procédé met en oeuvre des moyens pour contrôler le déphasage tension-courant au niveau du point de raccordement de l'équipement au réseau dont l'intensité et le signe sont déterminés de manière itérative de façon à minimiser le courant efficace circulant dans la ligne de transport, ledit procédé étant en outre **caractérisé en ce qu'**il comporte les étapes suivantes:
- Une première étape (21) d'attente;
- Une deuxième étape (22), durant laquelle on procède à une première mesure I₀ du courant de ligne et à sa mémorisation;
- Une troisième étape (23) durant laquelle on procède l'acquisition d'une valeur de palier de courant réactif;
la deuxième et la troisième étapes constituant une phase d'initialisation;
- Une quatrième étape (24) durant laquelle on procède à l'injection sur la ligne de transport dudit palier de courant, ladite injection étant réalisée à l'extrémité de la ligne, côté utilisation ;
- Une cinquième étape (25) durant laquelle on procède à une mesure courante Iₙ₊₁ du courant de ligne et à sa mémorisation;
- Une sixième étape (26) durant laquelle on détermine si Iₙ₊₁ est inférieure Iₙ;
- Une septième étape (27) durant laquelle si le test de la sixième étape (26) est positif on incrémente la valeur courante du palier de courant réactif d'une valeur donnée;
- Une huitième étape (28) durant laquelle si le test de la sixième étape (26) est négatif, on change le signe de l'incrément appliqué au cours de la septième étape (27);
le signe de l'incrément appliqué à la valeur courante du palier de courant réactif lors de la septième étape (27), initialement positif, étant fixé par l'exécution de l'étape 28 si le test de l'étape 26 est négatif; l'exécution des septième (27) et huitième (28) étapes étant suivie de l'exécution de la quatrième étape de sorte que la succession des étapes quatre (24) à sept (27) constituent une phase d'exécution itérative.

2. Procédé selon la revendication 1, **caractérisé en ce qu'**il comporte en outre:
- une neuvième étape (31) de mesure de la tension V délivrée par le réseau en bout de ligne de transport;
- une dixième étape (32) de test durant laquelle on détermine si la différence entre la tension V mesurée et une valeur de tension réseau nominale est inférieure à un seuil imposé donné;
L'exécution de cette dixième étape (32) se poursuivant par l'exécution de la cinquième étape (25) si le test est positif et par l'exécution de la quatrième étape (24) si le test est négatif.

3. Procédé selon l'une quelconque des revendications 1 à 2, **caractérisé en ce que** l'incrément ajouté ou retranché au palier courant de courant réactif respectivement au cours de la septième (27) étape présente une valeur fixe.

4. Procédé selon la revendication 3 **caractérisé en ce que** l'amplitude initiale du palier de courant injecté au cours de la troisième étape (23) ainsi que la valeur de l'incrément positif ou négatif ajouté au cours de la septième étape (27) à l'amplitude courante du palier de courant réactif, sont définies en fonction de la précision avec laquelle on souhaite réguler la valeur de la puissance fournie par le réseau et la rapidité avec laquelle on souhaite minimiser la valeur efficace du courant consommé.

5. Procédé selon l'une quelconque des revendications 1 à 3, **caractérisé en ce que** l'incrément positif ou négatif ajouté au palier de courant réactif respectivement au cours de la septième (27) étape présente une valeur qui varie en fonction de la valeur de l'écart (Iₙ₊₁ - Iₙ) mesurée au cours de la sixième étape (26).

6. Procédé selon l'une quelconque des revendications précédentes, **caractérisé en ce que** le passage de l'étape d'attente (21) aux étapes d'initialisation (22, 23) est initié par une commande externe.

7. Procédé selon l'une quelconque des revendications 1 à 5, **caractérisé en ce que** le passage de l'étape d'attente (21) aux étapes d'initialisation (22, 23) est initié par la valeur d'une variable d'état indiquant une augmentation de la puissance consommée par l'équipement alimenté par le réseau.

## Patentansprüche

1. Verfahren zur Optimierung der Leistung, die durch ein elektrisches Energieverteilungsnetz an ein elektrisches Gerät abgegeben wird, wobei das Netz eine Energiequelle, die eine Leistung von einem gegebenen Wert erzeugt, und eine Transportleitung für elektrische Energie aufweist, die eine reaktive Impedanz aufweist, wobei das elektrische Gerät über die Transportleitung an die Quelle angeschlossen ist, **dadurch gekennzeichnet, dass** das Verfahren Mittel einsetzt, um die Phasenverschiebung zwischen Strom und Spannung am Anschlusspunkt des elektrischen Gerätes an das Netz zu kontrollieren, deren Intensität und Vorzeichen derart iterativ bestimmt werden, um den Effektivstrom, der in der Transportleitung fließt, zu minimieren, wobei das Verfahren ferner **dadurch gekennzeichnet ist, dass** es die folgenden Schritte aufweist:
- einen ersten Schritt (21) des Wartens,
- einen zweiten Schritt (22), bei dem eine erste Messung I₀ des Netzstroms und ihr Speichern vorgenommen wird,
- einen dritten Schritt (23), bei dem das Erfassen eines Stufenwertes des Blindstroms vorgenommen wird,
wobei der zweite und dritte Schritt eine Initialisierungsphase darstellen,
- einen vierten Schritt (24), bei dem das Einspeisen des Blindstroms in die Transportleitung vorgenommen wird, wobei das Einspeisen am Ende der Leitung auf der Benutzerseite durchgeführt wird,
- einen fünften Schritt (25), bei dem eine aktuelle Messung Iₙ₊₁ des Netzstroms und ihr Speichern vorgenommen wird,
- einen sechsten Schritt (26), bei bestimmt wird, ob Iₙ₊₁ niedriger als Iₙ ist,
- einen siebten Schritt (27), bei dem, wenn der Test des sechsten Schrittes (26) positiv ist, der aktuelle Stufenwert des Blindstroms um einen bestimmten Wert erhöht wird,
- einen achten Schritt (28), bei dem, wenn der Test des sechsten Schrittes (26) negativ ist, das Vorzeichen des Inkrements, das während des siebten Schrittes (27) angewendet wird, geändert wird,
wobei das Vorzeichen des Inkrements, das auf den aktuellen Stufenwert des Blindstroms während des siebten Schrittes (27) angewendet wird, das anfänglich positiv ist, durch die Ausführung des Schrittes 28 festgelegt wird, wenn der Test des Schrittes 26 negativ ist, wobei auf die Ausführung des siebten (27) und achten (28) Schrittes die Ausführung des vierten Schrittes derart folgt, dass die Abfolge der Schritte vier (24) bis sieben (27) eine iterative Ausführungsphase darstellt.

2. Verfahren nach Anspruch 1, **dadurch gekennzeichnet, dass** es ferner Folgendes aufweist:
- einen neunten Schritt (31) der Messung der Spannung V, die von dem Netz am Ende der Transportleitung abgegeben wird,
- einen zehnten Schritt (32) des Tests, bei dem bestimmt wird, ob die Differenz zwischen der gemessenen Spannung V und einem Nennwert der Netzspannung niedriger als ein bestimmter festgesetzter Schwellenwert ist,
wobei die Ausführung dieses zehnten Schrittes (32) durch die Ausführung des fünften Schrittes (25) fortgesetzt wird, wenn der Test positiv ist, und durch die Ausführung des vierten Schrittes (24), wenn der Test negativ ist.

3. Verfahren nach einem der Ansprüche 1 bis 2, **dadurch gekennzeichnet, dass** das Inkrement, das zu dem Stufenwert des Blindstroms während des siebten Schrittes (27) jeweils hinzugefügt oder davon abgezogen wird, einen festen Wert aufweist.

4. Verfahren nach Anspruch 3, **dadurch gekennzeichnet, dass** die anfängliche Amplitude des Blindstroms, der während des dritten Schrittes (23) eingespeist wird, sowie der Wert des positiven oder negativen Inkrements, das während des siebten Schrittes (27) zu der aktuellen Amplitude des Stufenwertes des Blindstroms hinzugefügt wird, in Abhängigkeit von der Genauigkeit, mit der der Wert der Leistung, die von dem Netz abgegeben wird, geregelt werden soll, und der Geschwindigkeit, mit der der Effektivwert des verbrauchten Stroms minimiert werden soll, definiert werden.

5. Verfahren nach einem der Ansprüche 1 bis 3, **dadurch gekennzeichnet, dass** das positive oder negative Inkrement, das zu dem Stufenwert des Blindstroms während des siebten Schrittes (27) jeweils hinzugefügt wird, einen Wert aufweist, der in Abhängigkeit von dem Wert der Abweichung (Iₙ₊₁-In), der während des siebten Schrittes (26) gemessen wird, variiert.

6. Verfahren nach einem der vorhergehenden Ansprüche, **dadurch gekennzeichnet, dass** der Übergang von dem Schritt des Wartens (21) zu den Schritten des Initialisierens (22, 23) durch einen externen Befehl initiiert wird.

7. Verfahren nach einem der vorhergehenden Ansprüche 1 bis 5, **dadurch gekennzeichnet, dass** der Übergang von dem Schritt des Wartens (21) zu den Schritten des Initialisierens (22, 23) durch den Wert einer Zustandsvariablen initiiert wird, die eine Erhöhung der Leistung angibt, die durch das Gerät verbraucht wird, das von dem Netz gespeist wird.

## Claims

1. Method for optimizing the power delivered to an electrical equipment item by an electrical energy distribution network, said network comprising an electrical energy source producing a power of given value and an electrical energy transport line having a reactive impedance, the electrical equipment item being connected to the source via the transport line, **characterized in that** said source implements means for monitoring the voltage-current phase difference at the point of connection of the equipment item to the network, the intensity and the sign of which are determined iteratively so as to minimize the effective current circulating in the transport line, said method being also **characterized in that** it comprises the following steps:
- a first waiting step (21);
- a second step (22), during which there is a first measurement I₀ of the line current and the storage thereof;
- a third step (23), during which a reactive current level value is acquired;
the second and third steps constituting an initialization phase;
- a fourth step (24), during which said current level is injected into the transport line, said injection being done at the end of the line, usage side;
- a fifth step (25), during which there is a current measurement Iₙ₊₁ of the line current and the storage thereof;
- a sixth step (26), during which a determination is made as to whether Iₙ₊₁ is less than Iₙ;
- a seventh step (27), during which, if the test of the sixth step (26) is positive, the current value of the reactive current level is incremented by a given value;
- an eighth step (28), during which, if the test of the sixth step (26) is negative, the sign of the increment applied during the seventh step (27) is changed;
the sign of the increment applied to the current value of the reactive current level in the seventh step (27), initially positive, being set by the execution of the step 28 if the test of the step 26 is negative; the execution of the seventh (27) and eighth (28) steps being followed by the execution of the fourth step such that the succession of the steps four (24) to seven (27) constitute an iterative execution phase.

2. Method according to Claim 1, **characterized in that** it also comprises:
- a ninth step (31) of measurement of the voltage V delivered by the network at the transport line end;
- a tenth test step (32), during which a determination is made as to whether the difference between the measured voltage V and a rated network voltage value is below a given set threshold;
the execution of this tenth step (32) being followed by the execution of the fifth step (25) if the test is positive and by the execution of the fourth step (24) if the test is negative.

3. Method according to either one of Claims 1 or 2, **characterized in that** the increment added to or subtracted from the current reactive current level respectively during the seventh (27) step has a set value.

4. Method according to Claim 3, **characterized in that** the initial amplitude of the current level injected during the third step (23) and the value of the positive or negative increment added during the seventh step (27) to the current amplitude of the reactive current level, are defined as a function of the accuracy with which the value of the power supplied by the network is preferably regulated and the speed with which the effective value of the current consumed is preferably minimized.

5. Method according to any one of Claims 1 to 3, **characterized in that** the positive or negative increment added to the reactive current level respectively during the seventh (27) step has a value which varies as a function of the value of the difference (Iₙ₊₁ - Iₙ) measured during the sixth step (26).

6. Method according to any one of the preceding claims, **characterized in that** the transition from the waiting step (21) to the initialization steps (22, 23) is initiated by an external command.

7. Method according to any one of Claims 1 to 5, **characterized in that** the transition from the waiting step (21) to the initialization steps (22, 23) is initiated by the value of a state variable indicating an increase in the power consumed by the equipment item powered by the network.
